Europäisches Patentamt

European Patent Office

Office européen des brevets

(19)

(11) Veröffentlichungsnummer: **0 358 012**

**A2**

# (12) EUROPÄISCHE PATENTANMELDUNG

(21) Anmeldenummer: 89115215.9

(22) Anmeldetag: 18.08.89

(51) Int. Cl.5: **C01B 21/068**

(30) Priorität: 31.08.88 DE 3829502

(43) Veröffentlichungstag der Anmeldung:
14.03.90 Patentblatt 90/11

(84) Benannte Vertragsstaaten:
**DE FR GB IT SE**

(71) Anmelder: **BAYER AG**

**D-5090 Leverkusen 1 Bayerwerk(DE)**

(72) Erfinder: **Pitzer, Ulrike, Dr.**
**Doerperhofstrasse 39**
**D-4150 Krefeld(DE)**
Erfinder: **Franz, Gerhard, Dr.**
**Erich-Klausener-Strasse 44**
**D-4150 Krefeld(DE)**
Erfinder: **Laubach, Benno, Dr.**
**Bodelschwinghstrasse 22**
**D-4150 Krefeld(DE)**

(54) **Siliciumnitridpulver mit niedrigem isoelektrischen Punkt sowie Verfahren zu deren Herstellung.**

(57) Die vorliegende Erfindung betrifft $Si_3N_4$-Pulver mit einem Gesamtsauerstoffgehalt von kleiner als 1,8 Gew.-% sowie Verfahren zur Herstellung dieser Pulver.

EP 0 358 012 A2

## Siliciumnitridpulver mit niedrigem isoelektrischen Punkt sowie Verfahren zu deren Herstellung

Die vorliegende Erfindung betrifft $Si_3N_4$-Pulver mit einem Gesamtsauerstoffgehalt von kleiner als 1,8 Gew.-% sowie Verfahren zur Herstellung dieser Pulver.

Zur Herstellung von Bauteilen aus $Si_3N_4$-Keramik werden zunächst Pulver hergestellt, diese dann durch geeignete Formgebungsverfahren in sogenannte Grünkörper überführt und in einem weiteren Schritt zur fertigen Keramik gesintert. Neben dem Pressen und Spritzgießen hat sich in der letzten Zeit mehr und mehr das Schlickergießen als geeignetes Formgebungsverfahren erwiesen. Schlickergießen hat den Vorteil, daß aus einer Suspension gearbeitet werden kann, in der die Pulverteilchen vollkommen desagglomeriert vorliegen, wohingegen insbesondere beim Pressen mit feinteiligen, trockenen Pulvern gearbeitet werden muß, bei denen eine Agglomeration unvermeidbar ist. Agglomerate im Pulver können jedoch selbst nach der Sinterung noch negative Auswirkungen haben, indem sie die Festigkeit und Zuverlässigkeit des Bauteils erniedrigen (J.P. Torre, Y. Bigay, Ceram. Eng. Sci. Proc. 7 (1986), 893-899).

Der wichtigste Schritt beim Schlickerguß ist die Herstellung einer stabilen, deflockulierten Dispersion der $Si_3N_4$-Pulverteilchen in dem Lösungsmittel, d.h. im allgemeinen in Wasser. Um den Einfluß geringer, aber unkontrollierter Ionenkonzentrationen auszuschalten, wird im allgemeinen durch Zugabe definierter Salze eine bestimmte Ionenstärke eingestellt. Meistens wird in verdünnter (0,001 m) $KNO_3$-Lösung gearbeitet. In diesen Suspensionen treten jedoch häufig unerwünschte Flockungen auf. Diese werden durch Zugabe von organischen Dispergierhilfsmitteln verhindert.

Von $Si_3N_4$ ist jedoch bekannt, daß das Pulver und der Grünkörper frei von Kohlenstoff sein sollte (G. Ziegler, J. Heinrich, G. Wötting, J. Mater. Sci. 22 (1987), 3041-3086). Daher ist es von Nachteil, $Si_3N_4$-Suspensionen durch Zugabe organischer Dispergierhilfsmittel zu stabilisieren, da nach der Formgebung Kohlenstoffrückstände aus dem Dispergierhilfsmittel im Grünkörper zurückbleiben können.

Nach der Formgebung durch Schlickerguß wird durch Sinterung aus dem Grünkörper das fertige keramische Bauteil hergestellt. Für hohe Sinterdichten ist dabei ein gewisser Gehalt an Sauerstoff im $Si_3N_4$-Pulver notwendig. Andererseits sollte der Sauerstoffgehalt jedoch nicht zu hoch liegen, da durch hohe Sauerstoffgehalte die Festigkeiten bei hohen Temperaturen erniedrigt werden (G.Ziegler, J. Heinrich, G. Wötting, J. Mater. Sci. 22 (1987), 3041-3086). Insgesamt wird ein Sauerstoffgehalt von 1,5 Gew.-% als optimal betrachtet. Bei einem Sauerstoff gehalt von größer als 1,8 Gew-% ist mit einer Verschlechterung der Hochtemperatureigenschaften zu rechnen.

Aufgabe dieser Erfindung ist es nunmehr, $Si_3N_4$-Pulver herzustellen, die einen Gesamtsauerstoffgehalt von kleiner als 1,8 Gew.-% haben und gute Dispergiereigenschaften aufweisen.

Es wurden nun $Si_3N_4$-Pulver mit einem Gesamtsauerstoffgehalt von kleiner als 1,8 Gew.-% gefunden, die diese Anforderungen erfüllen. Bei Dispergierung in 0,001 m $KNO_3$-Lösung ohne Zusätze von Dispergierhilfsmitteln weisen sie einen isoelektrischen Punkt von kleiner als pH 4 auf. Solche Pulver sind neu, da bisher nur Zetapotentialkurven verschiedener $Si_3N_4$-Pulver bekannt geworden sind, bei denen der isoelektrische Punkt IEP von oberhalb pH 4 bis pH 8 liegt (R. de Jong, R.A. McCauley, in: Ceramic Transactions Vol.1 (1988), 477-484).

Zu diesen erfindungsgemäßen $Si_3N_4$-Pulvern kann man gelangen, wenn man von einem Pulver ausgeht, das einen extrem geringen Gesamtsauerstoffgehalt hat. Solche Pulver sowie Verfahren zu deren Herstellung sind Gegenstand der gleichzeitig entnommenen deutschen Patentanmeldung P 38 29 503 . Die dafür eingesetzten $Si_3N_4$-Pulver sollten einen Sauerstoffgehalt von weniger oder gleich 0,4 Gew-% aufweisen.

Gegenstand dieser Erfindung sind auch Verfahren zur Herstellung der erfindungsgemäßen $Si_3N_4$-Pulver. Ein mögliches erfindungsgemäßes Verfahren ist dadurch gekennzeichnet, daß $Si_3N_4$-Pulver mit einem Gesamtsauerstoffgehalt von kleiner oder gleich 0,4 Gew.-% bei Temperaturen von 700°C bis 1200°C und Zeiten zwischen 15 Min. und 90 Min. in sauerstoffhaltiger Atmosphäre geglüht wird. Daß eine Oxidation der Pulveroberfläche zu einer Erniedrigung des isoelektrischen Punktes auf kleiner als pH 4 führt, ist umso überraschender, als davon ausgegangen wird, daß eine oxidierende Wärmebehandlung nur einen vernachlässigbaren Einfluß auf den Zetapotentialverlauf und damit den isoelektrischen Punkt von $Si_3N_4$-Suspensionen hat (M.J. Crimp, R.E. Johnson, J.W. Halloran, D.L. Feke, in: Science of Ceramic Chemical Processing (1986), 539-549). Liegt der Gesamtsauerstoffgehalt höher als 0,4 Gew.-%, sind die nachfolgenden Schritte nur noch unter erheblichem technischen Aufwand so kontrollierbar, daß der geforderte Endsauerstoffgehalt 1,8 Gew.-% nicht mehr übersteigt, insbesondere wenn es sich um sehr feinteilige und damit reaktive Pulver handelt.

Da Siliciumnitrid thermodynamisch instabil gegenüber Siliciumdioxid ist, wurde erwartet, daß gerade Siliciumnitridpulver mit einem geringen Sauerstoffgehalt sehr leicht oxidiert und hydrolysiert werden können, bis eine Passivierungsschicht die Reaktion nach einiger Zeit etwas hemmt. Überraschenderweise wurde jedoch gefunden, daß Pulver mit einem Gesamtsauerstoffgehalt von kleiner oder gleich 0,4 Gew.-% gegenüber Oxidation und Hydroly sereaktionen sehr träge reagieren, so daß man bei ihnen auf technisch einfache Weise eine Oxidation der Pulveroberfläche und damit eine Erniedrigung des isoelektrischen Punktes bei Dispergierung in 0,001 m $KNO_3$-Lösung durchführen kann. Zum einen kann man sauerstoffarme $Si_3N_4$-Pulver oberflächlich oxidieren, indem man sie bei Temperaturen zwischen 700°C und 1200°C und Zeiten zwischen 15 Min. und 90 Min. an Luft glüht. Sind beim erfindungsgemäßen Verfahren die Zeiten zu kurz bzw. die Temperaturen zu niedrig, liegt der isoelektrische Punkt bei pH-Werten von größer als 4. Sind die Zeiten zu lang bzw. die Temperaturen zu hoch, kann der Sauerstoffgehalt auf über 1,8 Gew.-% ansteigen. Je nach Sauerstoffgehalt des Ausgangsmaterials müssen daher Zeit und Temperatur optimiert werden, um zu dem gewünschten $Si_3N_4$-Pulver zu gelangen, bei dem der Gesamtsauerstoffgehalt kleiner als 1,8 Gew.-% ist und der isoelektrische Punkt bei Dispergierung in 0,001 m $KNO_3$-Lösung nieder als pH 4 liegt.

In einer weiteren bevorzugten Ausführungsform läßt sich das erfindungsgemäße Pulver dadurch herstellen, indem man $Si_3N_4$-Pulver mit einem Sauerstoffgehalt von kleiner oder gleich 0,4 Gew.-% zwischen 15 Min. und 120 Min. in Wasser und/oder Alkoholen mahlt. Üblicherweise werden $Si_3N_4$-Pulver nicht in Wasser, sondern in organischen Lösungsmitteln gemahlen, da sonst der Sauerstoffgehalt auf einen zu hohen Wert ansteigt (B. Hoffmann, Keramische Zeitschrift 40(2) (1988), 90-96). Geht man jedoch von den Pulvern mit sehr niedrigem Sauerstoffgehalt aus, läßt sich durch Optimierung der Mahldauer der Sauerstoffgehalt unter 1,8 Gew.-% halten und gleichzeitig bei Dispergierung des Pulvers in 0,001 m $KNO_3$-Lösung ein isoelektrischer Punkt von kleiner als pH 4 erreichen.

Der Gesamtsauerstoffgehalt der $Si_3N_4$-Pulver wird nach der Methode der Heißextraktion im inerten Trägergasstrom ermittelt. Dabei wird eine $Si_3N_4$-Probe in einem Graphittiegel eingewogen und in einem Heliumstrom auf über 1800°C erhitzt. Der in der Probe enthaltene Sauerstoff wird dabei zu CO umgesetzt, das mit Hilfe einer IR-Meßzelle quantitativ bestimmt wird.

Der Zetapotentialverlauf in Abhängigkeit vom pH-Wert wird durch Messung der elektrokinetischen Beweglichkeit bestimmt. Die unterschiedlichen pH-Werte werden durch Zugabe von $HNO_3$ bzw. KOH eingestellt. Der isoelektrische Punkt liegt bei dem pH-Wert, bei dem das Zetapotential Null ist. Um den Einfluß der Ionenstärke auf den Zetapotentialverlauf konstant zu halten, wird die Messung in 0,001 m wäßriger $KNO_3$-Lösung durchgeführt.

Die erfindungsgemäßen $Si_3N_4$-Pulver und deren Herstellungsverfahren sollen im folgenden Beispiel näher erläutert werden, ohne daß darin eine Einschränkung zu sehen ist:

Beispiel

12,3 g $Si_3N_4$-Pulver mit einem Gesamtsauerstoffgehalt von 0,22 Gew.-%, welches entsprechend dem Beispiel 2 der Patentanmeldung P 38 29 503 erhalten wurde, werden in einem Röhrenofen unter Luft eine Stunde lang bei 1000°C geglüht. Die Gewichtszunahme ist dabei kleiner als 0,1 g.

Mit der Heißgasextraktionsmethode wird der Gesamtsauerstoffgehalt des geglühten Pulvers zu 0,45 Gew.-% bestimmt.

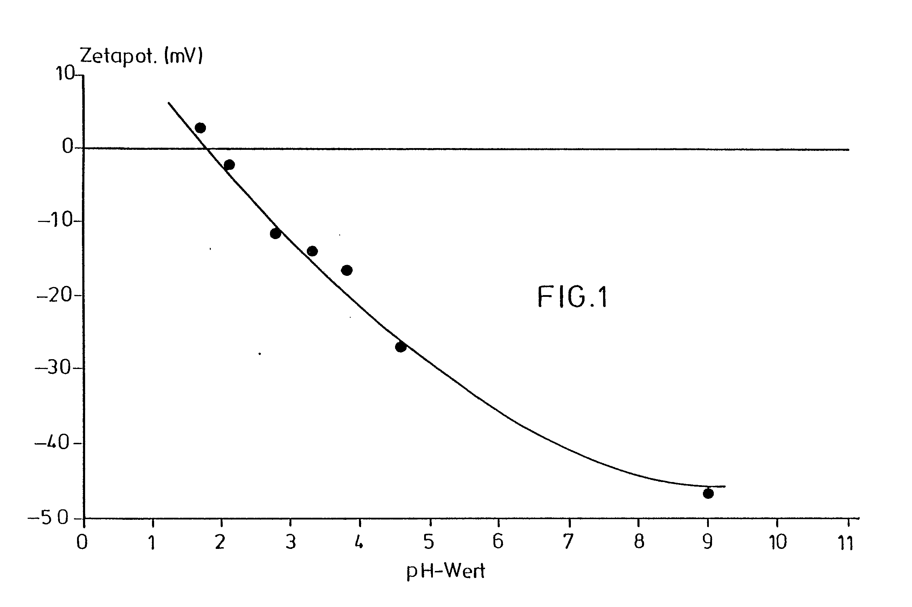

Das geglühte Pulver wird in 0,001 m wäßrige $KNO_3$-Lösung dispergiert und der Zetapotentialverlauf wird in Abhängigkeit vom pH-Wert bestimmt (Fig. 1). Die verschiedenen pH-Werte werden mit $HNO_3$ bzw. KOH eingestellt. Der isoelektrische Punkt liegt bei pH 1,9.

Ansprüche

1. $Si_3N_4$-Pulver mit einem Gesamtsauerstoffgehalt von kleiner als 1,8 Gew.-%, dadurch gekennzeichnet, daß der isoelektrische Punkt in 0,001 m wäßriger $KNO_3$-Lösung kleiner als pH 4 ist.

2. Verfahren zur Herstellung von $Si_3N_4$-Pulver gemäß Anspruch 1, dadurch gekennzeichnet, daß $Si_3N_4$-Pulver mit einem Gesamtsauerstoffgehalt von kleiner oder gleich 0,4 Gew.-% bei Temperaturen zwischen 700°C und 1200°C und Zeiten zwischen 15 Min. und 90 Min. in sauerstoffhaltiger Atmosphäre geglüht wird.

3. Verfahren zur Herstellung von $Si_3N_4$-Pulver gemäß Anspruch 1, dadurch gekennzeichnet, daß $Si_3N_4$-Pulver mit einem Gesamtsauerstoffgehalt von kleiner oder gleich 0,4 Gew.-% in Wasser und/oder Alkoholen zwischen 15 Min. und 120 Min. gemahlen wird.

FIG.1

Zetapot. (mV)

pH-Wert